# EUROPEAN PATENT APPLICATION

(11) **EP 4 282 869 A2**
(43) Date of publication of application: **29.11.2023**
(21) Application number: 23198865.0
(22) Date of filing: 25.05.2017
(51) Int. Cl.: C07F 9/6593

(54) **LITHIUM-ION BATTERY ELECTROLYTE AND LITHIUM-ION BATTERY**

(30) Priority: 17.11.2016 CN 201611009970
(62) Divisional of application: 17872846.5
(71) Applicant: Zhangjiagang Guotai-Huarong New Chemical Materials Co., Ltd, Suzhou, Jiangsu 215634 (CN)
(72) Inventor: CHEN, Xiaoqin, Suzhou, 215634 (CN); GAN, ChaoLun, Suzhou, 215634 (CN); DAI, JianCai, Suzhou, 215634 (CN); YUE, Li, Suzhou, 215634 (CN); CHEN, JunCai, Suzhou, 215634 (CN); ZHANG, Li, Suzhou, 215634 (CN); WANG, Feng, Suzhou, 215634 (CN)
(74) Representative: De Vries & Metman

(57) **Abstract**

The invention pertains to an additive M, which is characterized in that it is selected from the group consisting of substances of following structural formulas and combination thereof:

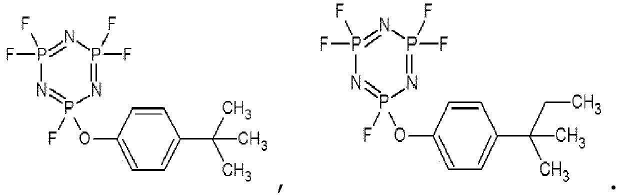

The invention also pertains to a process for the preparation of the additive M, to a lithium-ion battery electrolyte comprising the additive, and to a lithium-ion battery comprising the electrolyte.

## Description

### Technical Field of the Invention

The present invention relates to the electrochemical technical field, and in particular to a lithium-ion battery electrolyte and a lithium-ion battery.

### Background of the Invention

Lithium-ion batteries are becoming more and more widely used in people's production and life, which makes its safety issue be a focus of attention. The safety issue is a major challenge for lithium-ion batteries. When a large current is charged and discharged and when the battery is overcharged, the heat accumulation inside the battery can easily lead to thermal runaway, and even cause the battery to burn and explode.

There are two main solution on the aspect of the electrolyte, on the one hand, an overcharging additive is added, such that the overcharging additive is preferentially oxidized and polymerized and an insulating polymer film is formed on the positive electrode interface when the battery is overcharged, thereby blocking the current to flow inside the battery and preventing the battery from continuing to overcharge to avoid burning or exploding, on the other hand, the flame retardant is added to the electrolyte to make a low-flame point or non-combustible electrolyte, and burning or explosion of the battery is avoided as much as possible by the flame retardancy of the electrolyte when an unsafe event occurs. Currently used overcharging additives, mainly are BP (biphenyl) and CHB (cyclohexylbenzene), which have better overcharging performance, but are harmful to the cycle and high temperature performance of the battery. Common flame retardant additives are phosphorus flame retardants, halogen flame retardants and composite flame retardant additives (such as fluorophosphazene). Trimethyl phosphate (TMP), tris-(2,2,2-trifluoroethyl)phosphite (TTFP), fluorinated phosphate ester such as tris-(2,2,2-trifluoroethyl)phosphate (TFP), di-(2,2,2-trifluoroethyl)-methyl phosphate (BMP), fluorinated cyclic carbonate, fluorophosphazene, etc. are all ideal flame retardant additives. However, the addition of the flame retardant additives has to reach a certain amount to achieve a flame retardant effect, and excessive addition of the flame retardant additives increases the viscosity of the electrolyte, lowers the electrical conductivity of the electrolyte, and affects the electrical properties of the battery, thereby hindering the application of the flame retardant additives in electrolytes.

### Summary of the Invention

The technical problem to be solved by the present invention is to design and synthesize a series of compounds having both flame retardant and overcharging functional groups, and when the compounds are added to electrolyte, the electrolyte can prevent overcharging, has a flame retardant effect, and has good performance.

To achieve the above purpose, the technical solution employed by the present invention is as follows:

One purpose of the present invention is to provide an additive M having the following general structural formula: 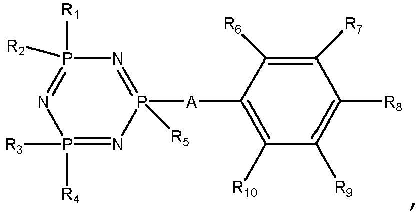 wherein R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution; A is a group consisting of O, S, N, or P; and R₆, R₇, R₈, R₉, and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and a fluorinated group consisting of any one of O, S, N, and P, wherein fluorination is a full substitution or a partial substitution.

Preferably, R₁, R₂, R₃, R₄ and R₅ are independently selected from the group consisting of haloalkyl, haloalkoxy, haloalkenyl, hydroxyl, carboxyl, etheroxy, and halogen. Further preferably, R₁, R₂, R₃, R₄ and R₅ are independently selected from halogen. More preferably, R₁, R₂, R₃, R₄ and R₅ are F.

Preferably, R₈ is selected from the group consisting of alkyl, cycloalkyl, alkoxy, phenyl, fluoroalkyl, fluorocycloalkyl, fluoroalkoxy, fluorophenyl and fluorophenoxy, wherein fluorination is a full substitution or a partial substitution, and R₆, R₇, R₉, and R₁₀ are hydrogen.

More preferably, the additive M is selected from the group consisting of substances of following structural formulas and combinations thereof: 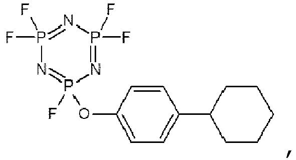 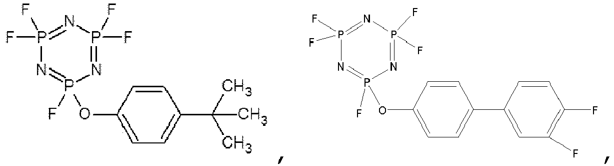 and

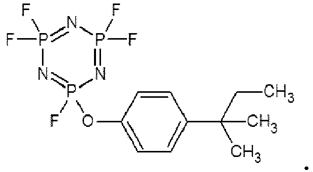

Firstly, these compounds have a large amount of N, P, F, so that it has a good flame retardant effect; secondly, these compounds have benzene, biphenyl, cyclohexylbenzene or fluorinated benzene, fluorinated biphenyl or fluorinated cyclohexylbenzene, and these compounds containing these functional groups may polymerize when oxidized, and an electrolyte using the compounds will be preferentially oxidized to form an insulating polymer preceding the normal electrolyte decomposition potential, and block the positive and negative electrodes for protection purposes when the battery is overcharged; thirdly, the compounds may form a more stable SEI film on the surface of the electrode with other additives during the battery formation process, and avoid damage on the cycle performance and the high temperature performance from the commonly used overcharge additives and flame retardant additives.

Another purpose of the present invention is to provide a process for preparation of the additive M, which is to react compound 1 with compound 2 in the presence of an acid binding agent and an organic solvent at 80 - 100 °C to give the additive M, wherein the compound 1 is 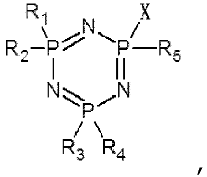 the compound 2 is 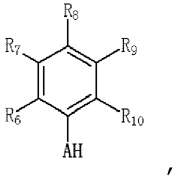 wherein, R1, R2, R3, R4 and R5 are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution; A is a group consisting of O, S, N, or P; R6, R7, R8, R9 and R10 are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and a fluorinated group consisting of any one of O, S, N, and P, wherein fluorination is a full substitution or a partial substitution; and X is F, Cl, or Br.

Preferably, the acid binding agent is triethylamine, and the organic solvent is acetonitrile.

Preferably, the compound 2 is p-cyclohexylphenol, p-tert-butylphenol, 3,4-difluorobiphenol or p-tert-amylphenol.

A third purpose of the present invention is to provide a lithium-ion battery electrolyte comprising a lithium salt, a solvent, and an additive, the additive containing an additive M selected from the group consisting of substances expressed by following structural formulas and combinations thereof: 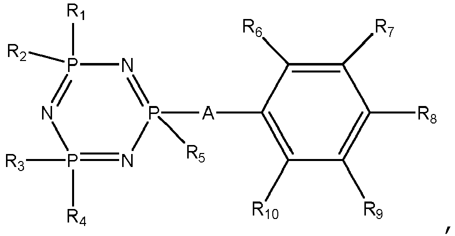 wherein R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution; A is a group consisting of O, S, N, or P; and R₆, R₇, R₈, R₉, and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and a fluorinated group consisting of any one of O, S, N, and P, wherein fluorination is a full substitution or a partial substitution.

Preferably, R₁, R₂, R₃, R₄ and R₅ are independently selected from the group consisting of haloalkyl, haloalkoxy, haloalkenyl, hydroxyl, carboxyl, etheroxy, and halogen. Further preferably, R₁, R₂, R₃, R₄ and R₅ are independently selected from halogen. More preferably, R₁, R₂, R₃, R₄ and R₅ are F.

Preferably, A is O.

Preferably, R₈ is selected from the group consisting of alkyl, cycloalkyl, alkoxy, phenyl, fluoroalkyl, fluorocycloalkyl, fluoroalkoxy, fluorophenyl and fluorophenoxy, wherein fluorination is a full substitution or a partial substitution. Further preferably, R₈ is cycloalkyl or alkyl or fluorophenyl.

Preferably, R₆, R₇, R₉, and R₁₀ are H.

More preferably, the additive M is selected from the group consisting of substances of following structural formulas and combinations thereof: 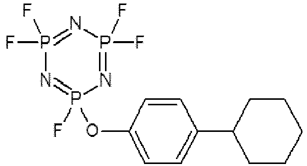 (cyclohexylphenoxy(pentafluoro)tripolyphosphazene), 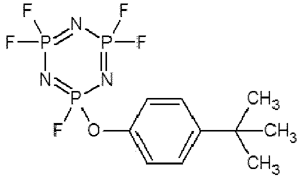 (tert-butylphenoxy(pentafluoro)tripolyphosphazene), 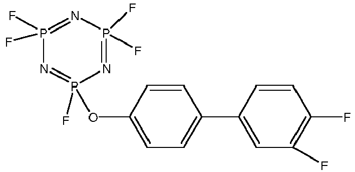 (3,4-difluorobiphenoxy(pentafluoro)tripolyphosphazene), 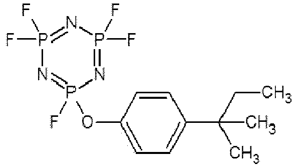 (tert-pentylphenoxy(pentafluoro)tripolyphosphazene).

In the present invention, the process for preparation of the additive M is to react compound 1 with compound 2 in the presence of an acid binding agent and an organic solvent at 80 - 100 °C to give the additive M, wherein the compound 1 is 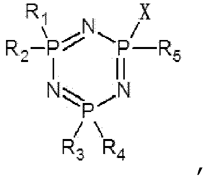 the compound 2 is 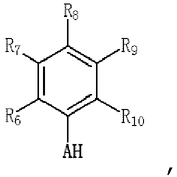 wherein, R1, R2, R3, R4 and R5 are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution; A is a group consisting of O, S, N, or P; and R6, R7, R8, R9 and R10 are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and a fluorinated group consisting of any one of O, S, N, and P, wherein fluorination is a full substitution or a partial substitution; X is F, Cl, or Br.

Preferably, the acid binding agent is triethylamine. Preferably, the organic solvent is acetonitrile. Preferably, the compound 1 is hexafluorocyclotriphosphazene. Preferably, the compound 2 is p-cyclohexylphenol, p-tert-butylphenol, 3,4-difluorobiphenol or p-tert-amylphenol. According to an embodiment of the present invention, a process for preparation of the additive M is: reacting hexafluorocyclotriphosphazene with p-cyclohexylphenol, p-tert-butylphenol or 3,4-difluorobiphenol in the presence of an acid binding agent and an organic solvent at 80 - 100 °C. In particular, the acid binding agent is triethylamine; and the organic solvent is acetonitrile.

According to another embodiment of the present invention, a process for preparation of the additive M is: reacting hexafluorocyclotriphosphazene with p-tert-amylphenol in the presence of an acid binding agent and an organic solvent at 80 - 100 °C.

In particular, the acid binding agent is triethylamine; and the organic solvent is acetonitrile.

Preferably, the additive M is added in an amount of 0.5 - 20% of the total mass of the electrolyte, further preferably 1 - 5%, more preferably 2 - 4%.

Preferably, the additive further contains 0.01 - 20% of other additives of a total mass of the electrolyte, and the other additives are selected from the group consisting of vinylene carbonate, 1,3-propane sultone, vinylethylene carbonate, propylene sulfate, trioctyl phosphate, and combinations thereof.

Preferably, the solvent contains a cyclic carbonate solvent and/or a chain carbonate solvent, and the cyclic carbonate solvent is selected from the group consisting of γ-butyrolactone (GBL), ethylene carbonate (EC), propylene carbonate (PC) and combinations thereof; the chain carbonate solvent is selected from the group consisting of dimethyl carbonate (DMC), ethyl methyl carbonate (EMC), diethyl carbonate (DEC), methyl propyl carbonate (MPC), methyl propionate (MP), ethyl propionate (EP), propyl propionate (PP), methyl acetate (MA), ethyl acetate (EA), propyl acetate (PA), methyl butyrate (MB), ethyl butyrate (EB), propyl butyrate (PB), and combinations thereof.

Preferably, the lithium salt contains lithium hexafluorophosphate (LiPF₆). Further preferably, a molar concentration of lithium hexafluorophosphate is 0.5 - 1.5 mol/L, more preferably 0.9 - 1.1 mol/L.

Further preferably, the lithium salt further contains other lithium salts selected from the group consisting of lithium tetrafluoroborate (LiBF₄), lithium hexafluoroarsenate (LiAsF₆), anhydrous lithium perchlorate (LiClO₄), and lithium bis(trifluoromethylsulfonyl)imide (LiN(SO₂CF₃)₂), lithium trifluoromethanesulfonate (LiSO₃CF₃), lithium bis(oxalate)borate (LiC₂O₄BC₂O₄), lithium oxalyldifluoroborate (LiF₂BC₂O₄), lithium bis(fluorosulfonyl)imide (LiN(SO₂F)₂), and combinations thereof.

A fourth purpose of the present invention is to provide a lithium-ion battery containing the above-mentioned lithium-ion battery electrolyte.

Due to the use of the above-mentioned technical solutions, the present invention has the following advantages over the prior art:
The additive M of the present invention has both flame retardant and overcharge functional groups, such that the electrolyte added with the additive M has a good flame retardant effect and a good overcharge prevention function, and has a little negative impact on battery performance.

### Brief Description of the Drawings

Fig. 1 is a MS spectrum of cyclohexylphenoxy(pentafluoro)tripolyphosphazene obtained in Preparation Example 1;
Fig. 2 is a GC spectrum of cyclohexylphenoxy(pentafluoro)tripolyphosphazene obtained in Preparation Example 1;
Fig. 3 is a TCD spectrum of cyclohexylphenoxy(pentafluoro)tripolyphosphazene obtained in Preparation Example 1;
Fig. 4 is a MS spectrum of tert-butylphenoxy(pentafluoro)tripolyphosphazene obtained in Preparation Example 4;
Fig. 5 is a GC spectrum of tert-butylphenoxy(pentafluoro)tripolyphosphazene obtained in Preparation Example 4;
Fig. 6 is a TCD spectrum of tert-butylphenoxy(pentafluoro)tripolyphosphazene obtained in Preparation Example 4;
Fig. 7 is a graph showing test results of lithium cobalt oxide graphite batteries used in Embodiments 1 to 6, Comparative Example 1 and Comparative Example 2, wherein battery formation was formed by charging and discharging at 0.1 C and the batteries were performed 1 C normal temperature cycle;
Fig. 8 is a graph showing the oxidation potential of the electrolyte of Embodiment 7 tested by LCO/Li/Li three-electrode system;
Fig. 9 is a test graph of lithium cobalt oxide graphite batteries used in Embodiments 7 and 8 and Comparative Example 3, which were performed overcharging tests at constant current of 3C firstly and then at constant voltage of 10V;
Fig. 10 is a graph showing the oxidation potential of the electrolyte of Embodiment 8 tested by LMO/Li/Li three-electrode system;
Fig. 11 is a graph showing the oxidation potential of the electrolyte of Embodiment 9 tested by LMO/Li/Li three-electrode system;
Fig. 12 is a graph showing test results of lithium cobalt oxide graphite batteries used in Embodiments 10 to 12 and Comparative Example 4, which were performed by charging and discharging at 0.1 C and performed 1 C normal temperature cycle;
Fig. 13 is a test graph of lithium cobalt oxide graphite batteries used in Embodiment 13 and Comparative Example 4, which were performed overcharging test at constant current of 3C firstly and then at constant voltage of 10V;
Fig. 14 is a graph showing dQ/dV to V curve of the formation in Comparative Example 1, Comparative Example 2, and Embodiment 4.

### Detailed Description of Exemplary Embodiments

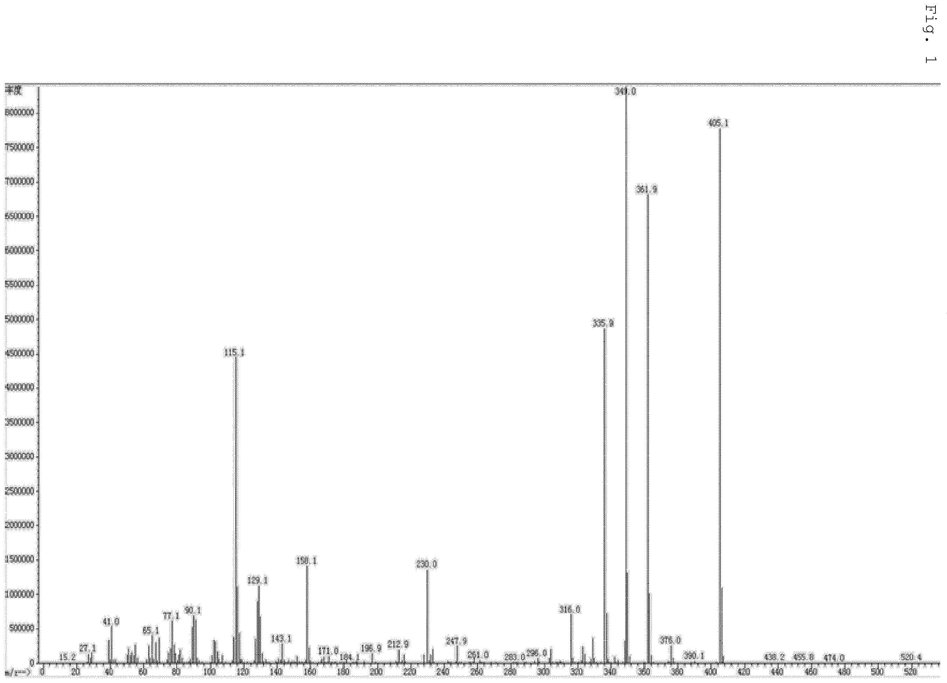

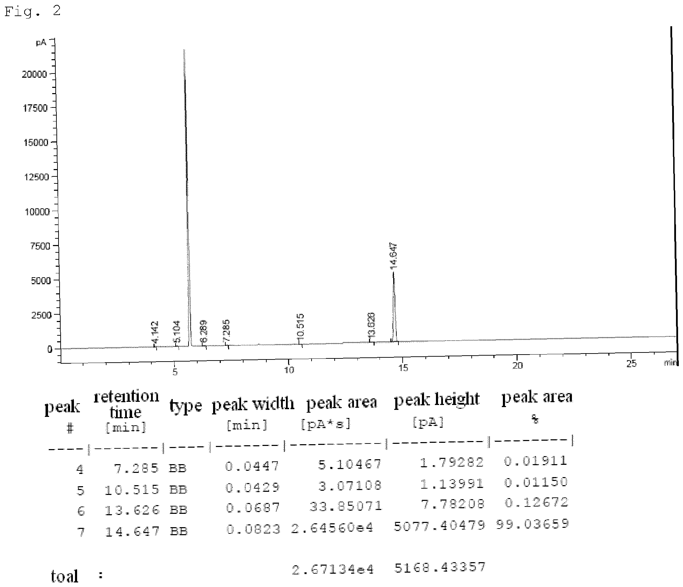

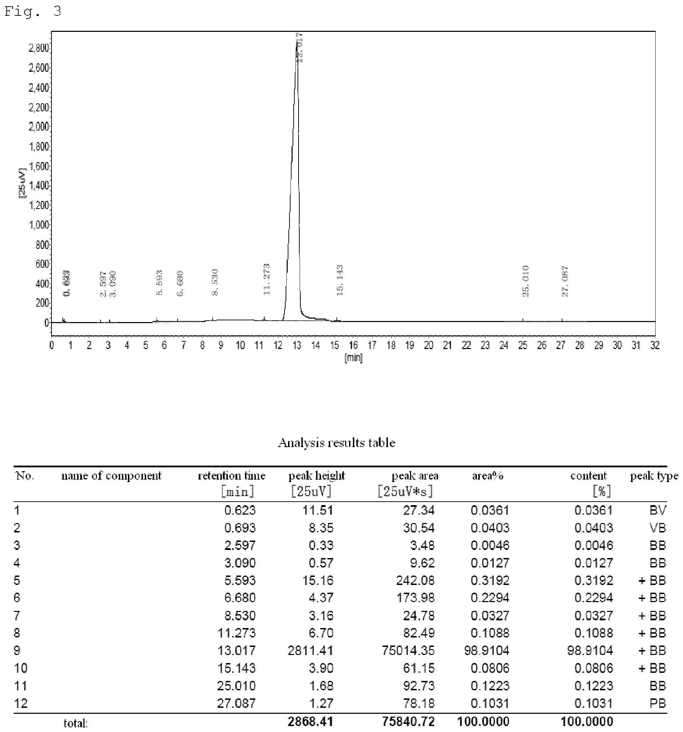

In the following, the present application is explained in detail combining with embodiments, but the present application is not limited to these embodiments. Preparation Example 1: Preparation of cyclohexylphenoxy(pentafluoro)tripolyphosphazene P-cyclohexylphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give cyclohexylphenoxy(pentafluoro)tripolyphosphazene. The MS spectrum of cyclohexylphenoxy(pentafluoro)tripolyphosphazene is shown in Fig. 1, the GC spectrum is shown in Fig. 2, and the TCD spectrum is shown in Fig. 3.

The reaction equation is:

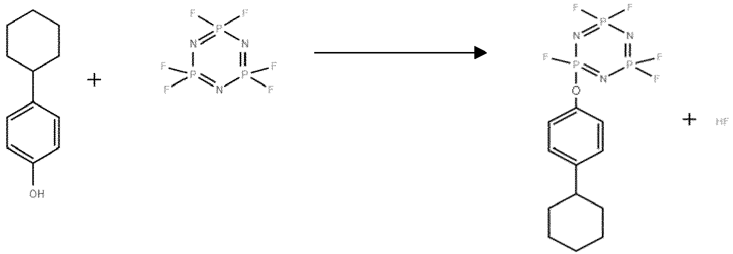

### Preparation Example 2: Preparation of tert-butylphenoxy(pentafluoro)tripolyphosphazene

P-tert-butylphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give tert-butylphenoxy(pentafluoro)tripolyphosphazene.

### Preparation Example 3: Preparation of 3,4-difluorobiphenoxy(pentafluoro)tripolyphosphazene

3,4-difluorobiphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give 3,4-difluorobiphenoxy(pentafluoro)tripolyphosphazene.

### Preparation Example 4: Preparation of tert-pentylphenoxy(pentafluoro)tripolyphosphazene

P-tert-amylphenol and hexafluorocyclotriphosphazene used as raw material, triethylamine selected as the acid binding agent, and acetonitrile selected as the organic solvent, were charged into a high-pressure autoclave at a time, and rapidly stirred, the temperature was raised to 90 °C, and the reaction was completed in 4 hours. The reaction solution was cooled to room temperature and filtered to give tert-pentylphenoxy(pentafluoro)tripolyphosphazene.

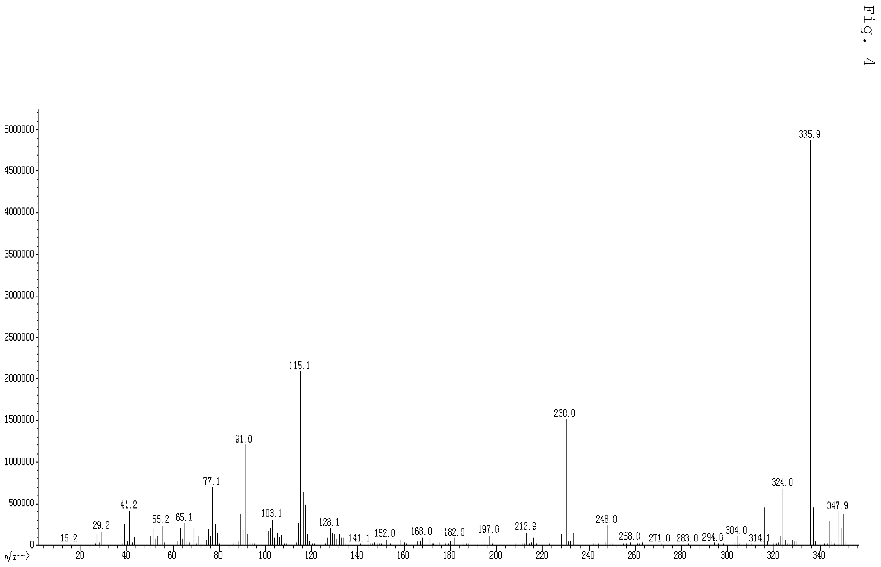

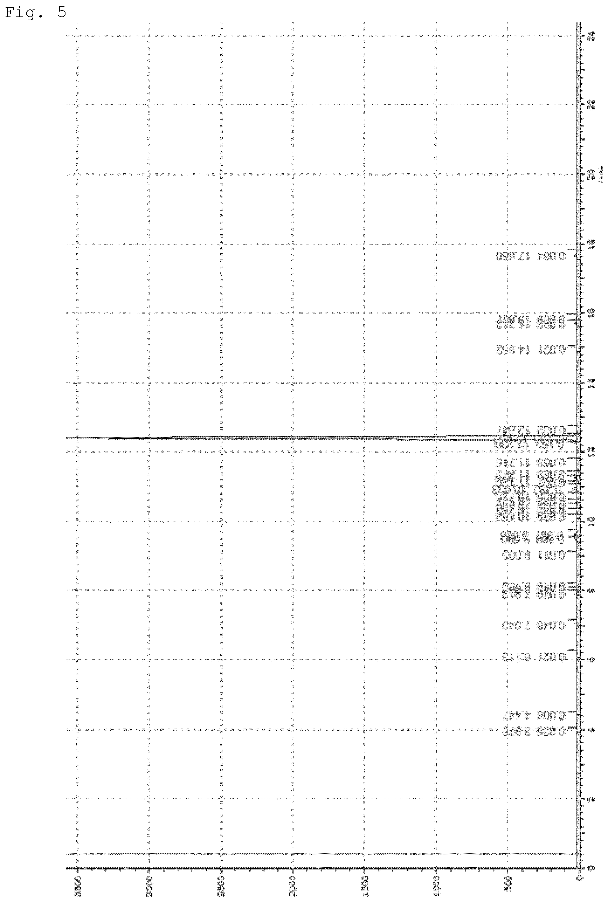

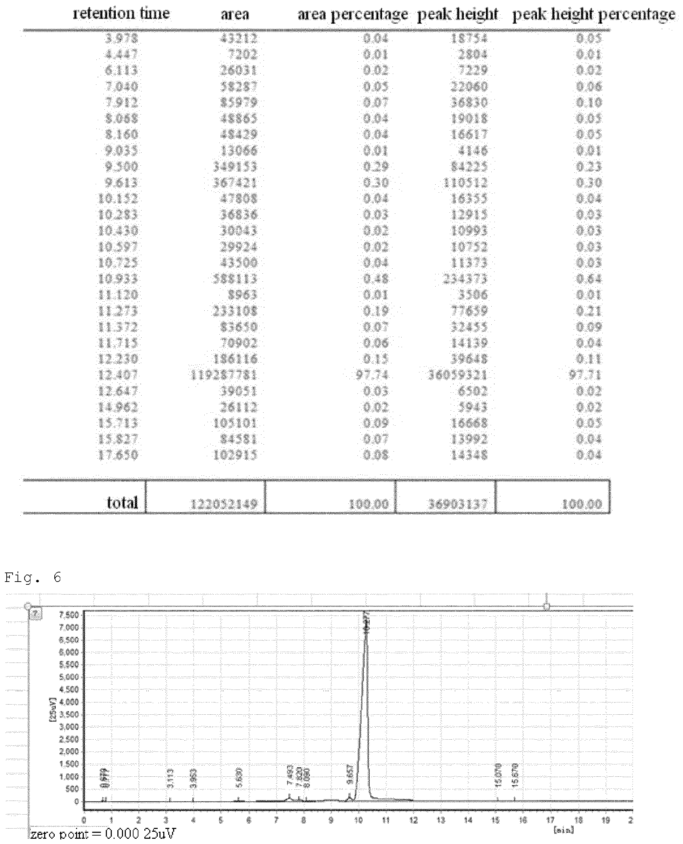

The MS spectrum of tert-pentylphenoxy(pentafluoro)tripolyphosphazene is shown in Fig. 4, the GC spectrum is shown in Fig. 5, and the TCD spectrum is shown in Fig. 6.

### Embodiment 1:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and tert-butylphenoxy(pentafluoro)tripolyphosphazene obtained in Preparation Example 2 was added according to 1% of the total mass of the electrolyte, and the mixture was sufficiently stirred under room temperature to prepare and give a lithium-ion battery electrolyte.

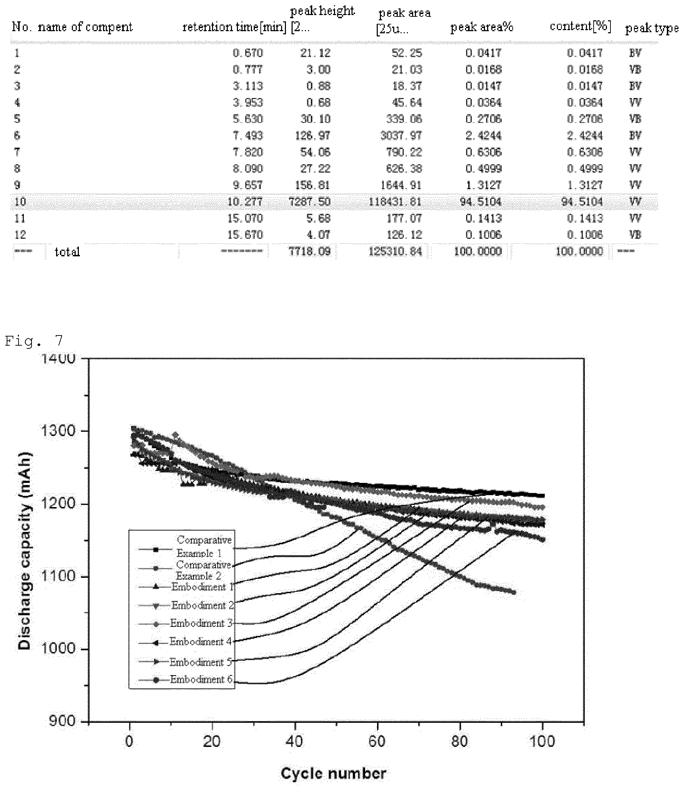

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C, and the batteries were performed 1 C normal temperature cycle, and the test results are shown in Fig. 7.

### Embodiment 2:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and tert-butylphenoxy(pentafluoro)tripolyphosphazene obtained in Preparation Example 2 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 3:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and cyclohexylphenoxy(pentafluoro)tripolyphosphazene obtained in Preparation Example 1 was added according to 1% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 4:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and cyclohexylphenoxy(pentafluoro)tripolyphosphazene obtained in Preparation Example 1 was added according to 5% of the total mass of the electrolyte, and the mixture was sufficiently stirred under room temperature to prepare and give a lithium-ion battery electrolyte.

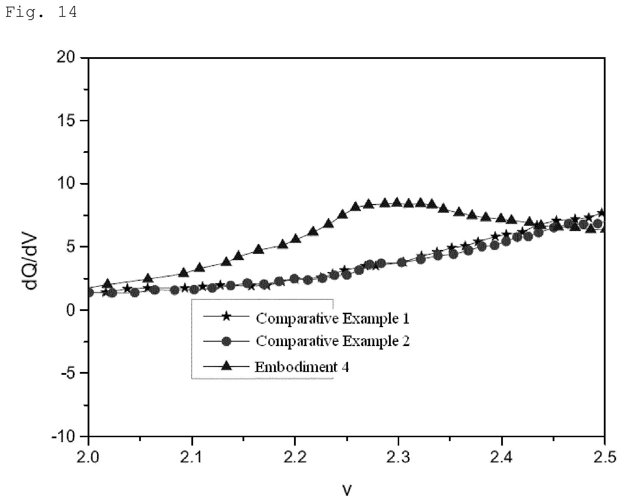

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7. The dQ/dV to V curve of the formation of the electrolyte is shown in Fig. 14.

### Embodiment 5:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and 3,4-difluorobiphenoxy(pentafluoro)tripolyphosphazene obtained in Preparation Example 3 was added according to 1% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 6:

In an argon-filled glove box (H₂O < 10 ppm), ethylene carbonate (EC), propylene carbonate (PC), and ethyl methyl carbonate (EMC) were uniformly mixed at a mass ratio of 1:1:2, then lithium hexafluorophosphate (LiPF₆) having a concentration of 1 mol/L of lithium ion were added, and 3,4-difluorobiphenoxy(pentafluoro)tripolyphosphazene obtained in Preparation Example 3 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Comparative Example 1:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and the mixture was sufficiently stirred under room temperature to prepare and give a lithium-ion battery electrolyte.

The burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and the batteries were formed by charging and discharging at 0.1 C and the batteries were performed 1 C normal temperature cycle, and the test results are shown in Fig. 7. The dQ/dV to V curve of the formation of the electrolyte is shown in Fig. 14.

### Comparative Example 2:

In an argon-filled glove box (H₂O < 10 ppm), ethylene carbonate (EC), propylene carbonate (PC), and diethyl carbonate (DEC) were uniformly mixed at a mass ratio of 1:1:2, then lithium hexafluorophosphate (LiPF₆) having a concentration of 1 mol/L of lithium ion were added, and p-cyclohexylphenol and ethoxy(pentafluoro)tripolyphosphazene was added according to 3% of the total mass of the electrolyte, respectively, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7. The dQ/dV to V curve of the formation of the electrolyte is shown in Fig. 14.

### Comparative Example 3:

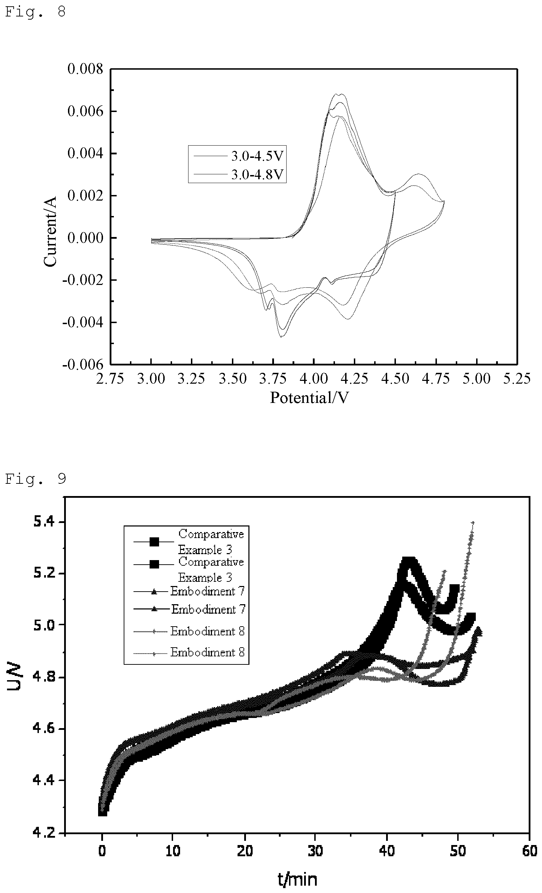

In an argon-filled glove box (H₂O < 10 ppm), ethylene carbonate (EC), propylene carbonate (PC), and diethyl carbonate (DEC) were uniformly mixed at a mass ratio of 1:1:1, then lithium hexafluorophosphate (LiPF₆) having a concentration of 1 mol/L of lithium ion were added, and the mixture was sufficiently stirred under room temperature to prepare and give a lithium-ion battery electrolyte. Lithium cobalt oxide graphite batteries were used, and were performed overcharging test at constant current firstly and then at constant voltage at 3C and 10V, the test curves are shown in Fig. 9.

### Embodiment 7:

In an argon-filled glove box (H₂O < 10 ppm), ethylene carbonate (EC), propylene carbonate (PC), and diethyl carbonate (DEC) were uniformly mixed at a mass ratio of 1:1:1, then lithium hexafluorophosphate (LiPF₆) having a concentration of 1 mol/L of lithium ion were added, and tert-butylphenoxy(pentafluoro)tripolyphosphazene obtained in Preparation Example 2 was added according to 3% of the total mass of the electrolyte, and the mixture was sufficiently stirred under room temperature to prepare and give a lithium-ion battery electrolyte.

The oxidation potential of the electrolyte was tested by LCO/Li/Li three-electrode system, and the test curves are shown in Fig. 8. Lithium cobalt oxide graphite batteries were used, and were performed overcharging test at constant current of 3C firstly and then at constant voltage of 10V, the test curves are shown in Fig. 9.

As a result, the battery voltage in Comparative Example 3 rapidly increased, and the battery eventually exploded and ignited, while the battery in Embodiment 7 did not explode or ignite.

### Embodiment 8:

In an argon-filled glove box (H₂O < 10 ppm), ethylene carbonate (EC), propylene carbonate (PC), and diethyl carbonate (DEC) were uniformly mixed at a mass ratio of 1:1:1, then lithium hexafluorophosphate (LiPF₆) having a concentration of 1 mol/L of lithium ion were added, and cyclohexylphenoxy(pentafluoro)tripolyphosphazene obtained in Preparation Example 1 was added according to 3% of the total mass of the electrolyte, and the mixture was sufficiently stirred under room temperature to prepare and give a lithium-ion battery electrolyte.

Lithium cobalt oxide graphite batteries were used, and were performed overcharging test at constant current of 3C firstly and then at constant voltage of 10V, the test curves are shown in Fig. 9.

As a result, the battery voltage in Comparative Example 3 rapidly increased, and the battery eventually exploded and ignited, while the battery in Embodiment 8 did not explode or ignite.

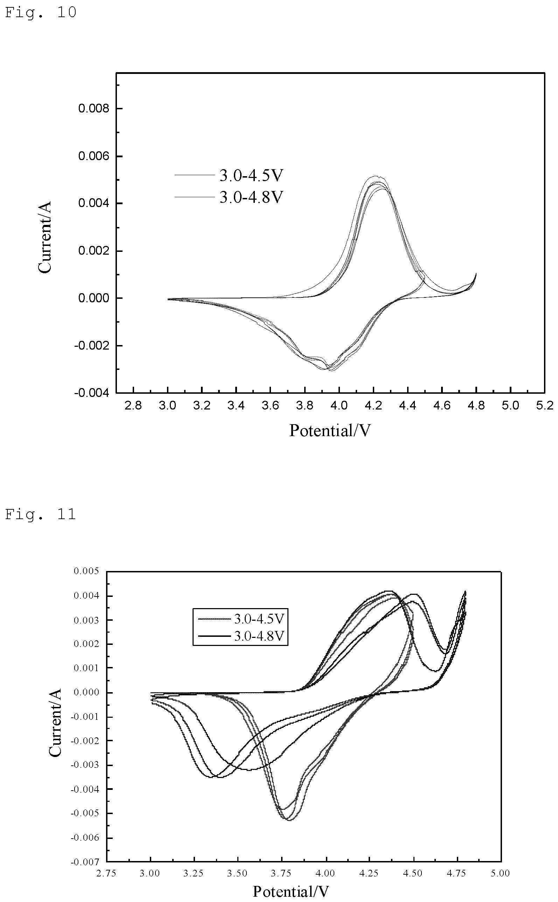

The oxidation potential of the electrolyte was tested by LMO/Li/Li three-electrode system, and the test curves are shown in Fig. 10.

### Embodiment 9:

In an argon-filled glove box (H₂O < 10 ppm), ethylene carbonate (EC), propylene carbonate (PC), and diethyl carbonate (DEC) were uniformly mixed at a mass ratio of 1:1:1, then lithium hexafluorophosphate (LiPF₆) having a concentration of 1 mol/L of lithium ion were added, and 3,4-difluorobiphenoxy(pentafluoro)tripolyphosphazene obtained in Preparation Example 3 was added according to 3% of the total mass of the electrolyte, and the mixture was sufficiently stirred under room temperature to prepare and give a lithium-ion battery electrolyte.

The oxidation potential of the electrolyte was tested by LMO/Li/Li three-electrode system, and the test curves are shown in Fig. 11.

### Embodiment 10:

In an argon-filled glove box (H₂O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF₆) having a concentration of 1 mol/L of lithium ion were added, and tert-pentylphenoxy(pentafluoro)tripolyphosphazene obtained in Preparation Example 4 was added according to 1% of the total mass of the electrolyte, and the mixture was sufficiently stirred under room temperature to prepare and give a lithium-ion battery electrolyte.

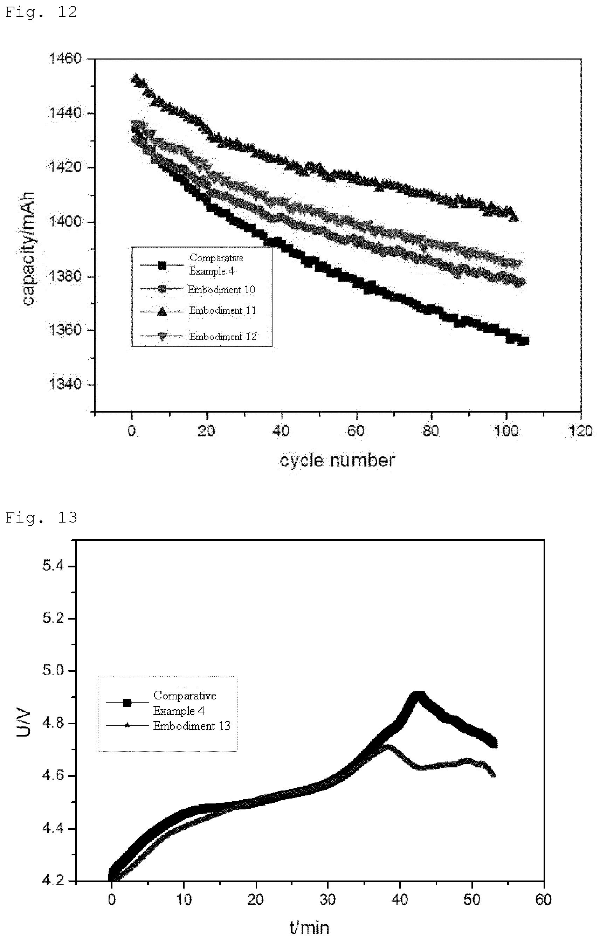

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

### Embodiment 11:

In an argon-filled glove box (H₂O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF₆) having a concentration of 1 mol/L of lithium ion were added, and tert-pentylphenoxy(pentafluoro)tripolyphosphazene obtained in Preparation Example 4 was added according to 3% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

### Embodiment 12:

In an argon-filled glove box (H₂O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF₆) having a concentration of 1 mol/L of lithium ion were added, and tert-pentylphenoxy(pentafluoro)tripolyphosphazene obtained in Preparation Example 4 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

Lithium cobalt oxide graphite batteries were used, and were performed overcharging test at constant current of 3C firstly and then at constant voltage of 10V, the test curves are shown in Fig. 13.

As a result, the battery voltage in following Comparative Example 4 rapidly increased, and the battery eventually exploded and ignited, while the battery in Embodiment 12 did not explode or ignite.

### Comparative Example 4:

In an argon-filled glove box (H₂O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF₆) having a concentration of 1 mol/L of lithium ion were added, and the mixture was sufficiently stirred under room temperature to prepare and give a lithium-ion battery electrolyte.

The burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

Lithium cobalt oxide graphite batteries were used, and were performed overcharging test at constant current of 3C firstly and then at constant voltage charging of 10V, the test curves are shown in Fig. 13.

**Table 1**

| | Compatibility | Electrical | Burning |
|---|---|---|---|
| | | Conductivity (ms/cm) | Time Per Gram (s) |
| Comparative Example 1 | Uniform | 6.91 | 71.53 |
| Comparative Example 2 | Uniform | 6.35 | 25.12 |
| Embodiment 1 | Uniform | 6.75 | 59.78 |
| Embodiment 2 | Uniform | 6.15 | 5.86 |
| Embodiment 3 | Uniform | 6.69 | 40.68 |
| Embodiment 4 | Uniform | 6.02 | 2.10 |
| Embodiment 5 | Uniform | 6.70 | 30.15 |
| Embodiment 6 | Uniform | 6.01 | 0.95 |
| Comparative Example 4 | Uniform | 10.38 | 116.2 |
| Embodiment 10 | Uniform | 10.25 | 82.2 |
| Embodiment 11 | Uniform | 10.09 | 72.6 |
| Embodiment 12 | Uniform | 9.91 | 69.1 |

The embodiments described above are only for illustrating the technical concepts and features of the present invention, and are intended to make those skilled in the art being able to understand the present invention and thereby implement it, and should not be concluded to limit the protective scope of this invention. Any equivalent variations or modifications according to the present invention should be covered by the protective scope of the present invention.

The following describes various particular aspects of the invention and their relationship.
1. An additive M, which is characterized in that the additive M has a general structural formula as follows: 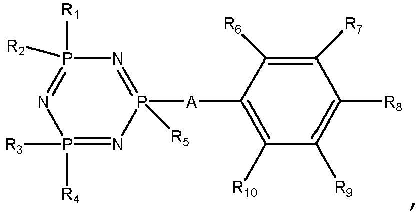 wherein,
   R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution;
   A is a group consisting of O, S, N, or P; and
   R₆, R₇, R₈, R₉, and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and fluorinated group consisting of any one of O, S, N, and P, wherein fluorination is a full substitution or a partial substitution.
2. The additive M according to aspect 1 listed above, which is characterized in that R₁, R₂, R₃, R₄ and R₅ are independently selected from the group consisting of haloalkyl, haloalkoxy, haloalkenyl, hydroxyl, carboxyl, etheroxy, and halogen.
3. The additive M according to aspect 2 listed above which is characterized in that R₁, R₂, R₃, R₄ and R₅ are independently selected from halogen.
4. The additive M according to aspect 3 listed above which is characterized in that R₁, R₂, R₃, R₄ and R₅ are F.
5. The additive M according to aspect 1 listed above which is characterized in that R₈ is selected from the group consisting of alkyl, cycloalkyl, alkoxy, phenyl, fluoroalkyl, fluorocycloalkyl, fluoroalkoxy, fluorophenyl and fluorophenoxy, wherein fluorination is a full substitution or a partial substitution.
6. The additive M according to aspect 1 listed above which is characterized in that R₆, R₇, R₉, and R₁₀ are hydrogen.
7. The additive M according to any one of aspects 1 - 6 listed above, which is characterized in that the additive M is selected from the group consisting of substances of following structural formulas and combinations thereof: 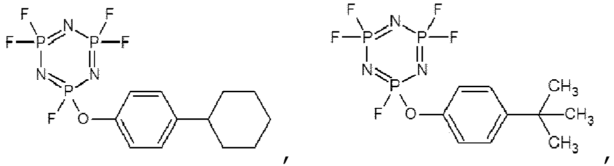 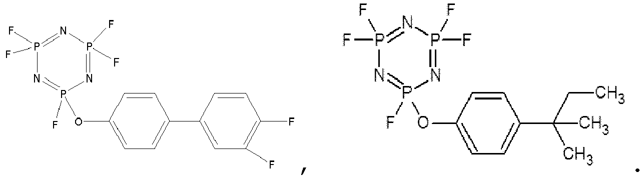
8. A process for preparation of the additive M according to any one of aspects 1 - 7 listed above which is characterized by reacting compound 1 with compound 2 in the presence of an acid binding agent and an organic solvent at 80 - 100 °C, wherein,
   the compound 1 is 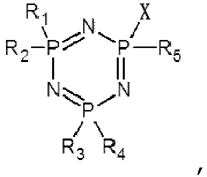 the compound 2 is 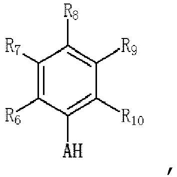 wherein, R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution;
   A is a group consisting of O, S, N, or P;
   R₆, R₇, R₈, R₉, and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and fluorinated group consisting of any one of O, S, N, and P, wherein fluorination is a full substitution or a partial substitution; and
   X is F, Cl, or Br.
9. The process for preparation of the additive M according to aspect 8 listed above, which is characterized in that the acid binding agent is triethylamine.
10. The process for preparation of the additive M according to aspect 8 listed above, which is characterized in that the organic solvent is acetonitrile.
11. The process for preparation of the additive M according to aspect 8 listed above, which is characterized in that the compound 1 is hexafluorocyclotriphosphazene.
12. The process for preparation of the additive M according to aspect 8 listed above, which is characterized in that the compound 2 is p-cyclohexylphenol, p-tert-butylphenol, 3,4-difluorobiphenol or p-tert-amylphenol.
13. A lithium-ion battery electrolyte, comprising a lithium salt, a solvent, and an additive, which is characterized in that the additive contains an additive M selected from the group consisting of substances of following structural formulas and combinations thereof: 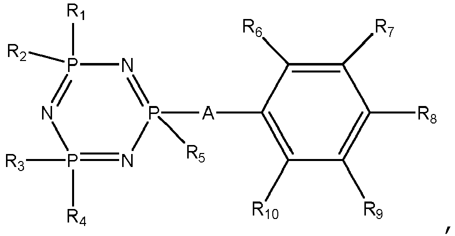 wherein,
   R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution;
   A is a group consisting of O, S, N, or P; and
   R₆, R₇, R₈, R₉, and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and fluorinated group consisting of any one of O, S, N, and P, wherein fluorination is a full substitution or a partial substitution.
14. The lithium-ion battery electrolyte according to aspect 13 listed above, which is characterized in that R₁, R₂, R₃, R₄ and R₅ are independently selected from the group consisting of haloalkyl, haloalkoxy, haloalkenyl, hydroxyl, carboxyl, etheroxy, and halogen.
15. The lithium-ion battery electrolyte according to aspect 14 listed above, which is characterized in that R₁, R₂, R₃, R₄ and R₅ are independently selected from halogen.
16. The lithium-ion battery electrolyte according to aspect 15 listed above, which is characterized in that R₁, R₂, R₃, R₄ and R₅ are F.
17. The lithium-ion battery electrolyte according to aspect 13 listed above, which is characterized in that R₈ is selected from the group consisting of alkyl, cycloalkyl, alkoxy, phenyl, fluoroalkyl, fluorocycloalkyl, fluoroalkoxy, fluorophenyl and fluorophenoxy, wherein fluorination is a full substitution or a partial substitution.
18. The lithium-ion battery electrolyte according to aspect 13 listed above, which is characterized in that R₆, R₇, R₉, and R₁₀ are hydrogen.
19. The lithium-ion battery electrolyte according to any one of aspects 13 - 18 listed above, which is characterized in that the additive M is selected from the group consisting of substances of following structural formulas and combinations thereof: 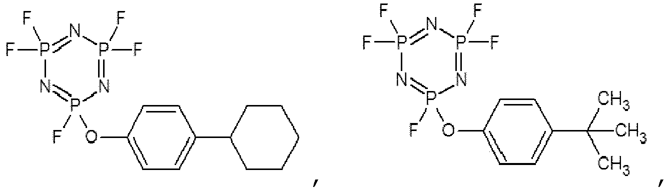 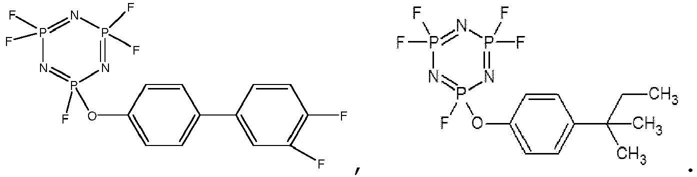
20. The lithium-ion battery electrolyte according to aspect 13 listed above, which is characterized in that a process for preparation of the additive M is to react compound 1 with compound 2 in the presence of an acid binding agent and an organic solvent at 80 - 100 °C to give
   the additive M, wherein the compound 1 is 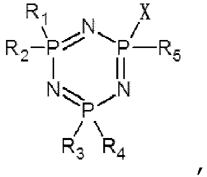 the compound 2 is 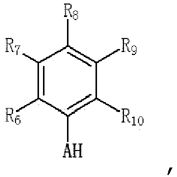 wherein,
   R₁, R₂, R₃, R₄ and R₅ are independently selected from the group consisting of hydrogen, alkyl, alkoxy, alkenyl, haloalkyl, haloalkoxy, haloalkenyl, hydroxyl, carboxyl, etheroxy, and halogen, wherein, the halogen is F, Cl, or Br, and halogenation is a full substitution or a partial substitution;
   A is a group consisting of O, S, N, or P;
   R₆, R₇, R₈, R₉ and R₁₀ are independently selected from the group consisting of hydrogen, alkyl, cycloalkyl, alkoxy, phenyl, fluoroalkyl, fluorocycloalkyl, fluoroalkoxy, fluorophenyl, fluorophenoxy, and fluorinated group consisting of any one of O, S, N, and P, wherein fluorination is a full substitution or a partial substitution; and
   X is F, Cl, or Br.
21. The lithium-ion battery electrolyte according to aspect 20 listed above, which is characterized in that the acid binding agent is triethylamine.
22. The lithium-ion battery electrolyte according to aspect 20 listed above, which is characterized in that the organic solvent is acetonitrile.
23. The lithium-ion battery electrolyte according to aspect 20 listed above, which is characterized in that the compound 1 is hexafluorocyclotriphosphazene.
24. The lithium-ion battery electrolyte according to aspect 20 listed above, which is characterized in that the compound 2 is p-cyclohexylphenol, p-tert-butylphenol, 3,4-difluorobiphenol or p-tert-amylphenol.
25. The lithium-ion battery electrolyte according to aspect 19 listed above, which is characterized in that a process for preparation of the additive M is: reacting hexafluorocyclotriphosphazene with p-cyclohexylphenol, p-tert-butylphenol or 3,4-difluorobiphenol in the presence of an acid binding agent and an organic solvent at 80 - 100 °C.
26. The lithium-ion battery electrolyte according to aspect 25 listed above, which is characterized in that the acid binding agent is triethylamine; and the organic solvent is acetonitrile.
27. The lithium-ion battery electrolyte according to aspect 19 listed above, which is characterized in that a process for preparation of the additive M is: reacting hexafluorocyclotriphosphazene with p-tert-amylphenol in the presence of an acid binding agent and an organic solvent at 80 - 100 °C.
28. The lithium-ion battery electrolyte according to aspect 27 listed above, which is characterized in that the acid binding agent is triethylamine; and the organic solvent is acetonitrile.
29. The lithium-ion battery electrolyte according to any one of aspects 13 - 19 listed above, which is characterized in that the additive M is added in an amount of 0.5 - 20% of the total mass of the electrolyte.
30. The lithium-ion battery electrolyte according to aspect 29 listed above, which is characterized in that the additive M is added in an amount of 1 - 5% of the total mass of the electrolyte.
31. The lithium-ion battery electrolyte according to aspect 30 listed above, which is characterized in that the additive M is added in an amount of 2 - 4% of a total mass of the electrolyte.
32. The lithium-ion battery electrolyte according to any one of aspects 13 - 19 listed above, which is characterized in that the additive further contains 0.01 - 20% of other additives of a total mass of the electrolyte, and the other additives are selected from the group consisting of vinylene carbonate, 1,3-propane sultone, vinylethylene carbonate, propylene sulfate, trioctyl phosphate, and combinations thereof.
33. The lithium-ion battery electrolyte according to any one of aspects 13 - 19 listed above, which is characterized in that the solvent contains a cyclic carbonate solvent and/or a chain carbonate solvent, and the cyclic carbonate solvent is selected from the group consisting of γ-butyrolactone, ethylene carbonate, propylene carbonate and combinations thereof; the chain carbonate solvent is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, and combinations thereof.
34. The lithium-ion battery electrolyte according to any one of aspects 13 - 19 listed above, which is characterized in that the lithium salt contains lithium hexafluorophosphate.
35. The lithium-ion battery electrolyte according to aspect 34 listed above, which is characterized in that a molar concentration of the lithium hexafluorophosphate is 0.5 - 1.5 mol/L.
36. The lithium-ion battery electrolyte according to aspect 35 listed above, which is characterized in that a molar concentration of the lithium hexafluorophosphate is 0.9 - 1.1 mol/L.
37. The lithium-ion battery electrolyte according to aspect 34 listed above, which is characterized in that the lithium salt further contains other lithium salts selected from the group consisting of lithium tetrafluoroborate, lithium hexafluoroarsenate, anhydrous lithium perchlorate, and lithium bis(trifluoromethylsulfonyl)imide, lithium trifluoromethanesulfonate, lithium bis(oxalate)borate, lithium oxalyldifluoroborate, lithium bis(fluorosulfonyl)imide, and combinations thereof.
38. A lithium-ion battery, which is characterized in that the lithium-ion battery comprises the lithium-ion battery electrolyte according to any one of aspects 13 - 37 listed above.

## Claims

1. An additive M which is **characterized in that** the additive M is selected from the group consisting of substances of following structural formulas and combination thereof:

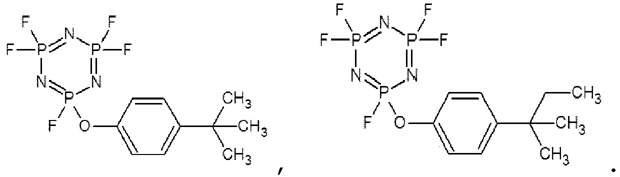

2. A process for preparation of the additive M according to claim 1, which is **characterized by** reacting compound 1 with compound 2 in the presence of an acid binding agent and an organic solvent at 80 - 100 °C, wherein,
the compound 1 is 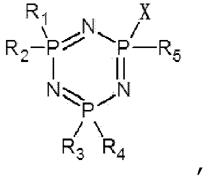
the compound 2 is 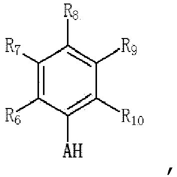
wherein, R₁, R₂, R₃, R₄ and R₅ are F;
A is O;
R₆, R₇, R₈, R₉, and R₁₀ are hydrogen; and
X is F, Cl, or Br.

3. The process for preparation of the additive M according to claim 2 which is **characterized in that** the acid binding agent is triethylamine; or the organic solvent is acetonitrile.

4. A lithium-ion battery electrolyte, comprising a lithium salt, a solvent, and an additive, which is **characterized in that** the additive contains the additive M according to claim 1.

5. The lithium-ion battery electrolyte according to claim 4, which is **characterized in that** the additive M is added in an amount of 0.5 - 20% of the total mass of the electrolyte, preferably 1 - 5%, more preferably 2 - 4%.

6. The lithium-ion battery electrolyte according to claim 4 or 5, which is **characterized in that** the additive further contains 0.01 - 20% of other additives of a total mass of the electrolyte, and the other additives are selected from the group consisting of vinylene carbonate, 1,3-propane sultone, vinylethylene carbonate, propylene sulfate, trioctyl phosphate, and combinations thereof;
the solvent contains a cyclic carbonate solvent and/or a chain carbonate solvent, and the cyclic carbonate solvent is selected from the group consisting of γ-butyrolactone, ethylene carbonate, propylene carbonate and combinations thereof; the chain carbonate solvent is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, and combinations thereof; or
the lithium salt contains lithium hexafluorophosphate.

7. A lithium-ion battery, which is **characterized in that** the lithium-ion battery comprises the lithium-ion battery electrolyte according to any one of claims 4 - 6.
